# EUROPEAN PATENT SPECIFICATION

(11) **EP 0 694 437 B1**
(45) Date of publication and mention of the grant of the patent: **22.04.1998**
(21) Application number: 95830311.7
(22) Date of filing: 18.07.1995
(51) Int. Cl.: B60N 2/28

(54) **Device for quick coupling of a child seat to a motor-vehicle seat**
Vorrichtung zum Schnellverbinden eines Kindersitzes mit einem Kraftwagensitz
Dispositif d'accouplement rapide d'un siège d'enfant à un siège de véhicule automobile

(30) Priority: 26.07.1994 IT TO940616
(43) Date of publication of application: 31.01.1996
(73) Proprietor: LEAR CORPORATION ITALIA S.p.A., 10128 Torino (IT)
(72) Inventor: Marinelli, Francesco, I-10060 San Secondo di Pinerolo (Torino) (IT)
(74) Representative: Notaro, Giancarlo

(56) References cited:
- EP-A- 0 619 201
- EP-A- 0 619 202
- DE-A- 4 137 599
- DE-A- 4 230 879
- GB-A- 2 116 837
- US-A- 2 308 315

## Description

The present invention relates to a device for quick coupling of a child seat to a motor-vehicle seat (see, for example, GB-A-2 116 837, corresponding to the preamble of claim 1.)

According to the conventional art, child seats are placed on a front or rear motor-vehicle seat and then fixed directly to the motor-vehicle frame with the aid of belts. This solution is not satisfactory both from the standpoint of safety and from the standpoint of convenience of use. For example, in the case of a child seat mounted on a rear seat, any impact of the luggage stored in the rear luggage compartment of the motor-vehicle against the backrest of the rear seat, as a result of a front collision of the vehicle, is very dangerous for the child, since the backrest of the rear seat of the vehicle tends to move forwardly, whereas the child seat does not follow this backrest in its movement, since it is connected to the motor-vehicle frame. The use of belts for fixing the child seat further renders this mounting relatively complicated and time-consuming.

The general problem on which the present invention is based is that of overcoming said drawbacks by providing a connecting device which enables a child seat to be mounted rapidly, by securing directly the child seat to the frame of the seat of the vehicle rather than to the body of the latter.

Connecting devices have already been proposed for quick coupling of a child seat to an adapter frame which, in turn, is coupled to a motor-vehicle seat (DE-A-41 37 599 and the above-mentioned GB-A-2 116 837).

Further connecting devices of this type are known from either of EP-A-0 619 201 and EP-A-0 619 202, which are comprised in the state of the art pursuant to Article 54(3) and (4) EPC only; these disclosures do not show quick couplings associated in pairs to a respective common operating lever. Still another connecting device comprised in the state of the art pursuant to Article 54(3) and (4) EPC only is the one disclosed in EP-A-0 693 393; in this device, the coupling elements fixed to the frame of the backrest of the motor-vehicle seat are provided within the bottom of said backrest.

The object of the present invention is that of providing a device of the above indicated type which is particularly simple, unexpensive and efficient. This object is achieved by a connecting device having the characterising the features given in the appended claim 1.

The device according to the present invention enables on one hand a connection by quick couplings to be provided, which renders the operation for mounting the child seat very simple and rapid, and on the other hand allows standardised coupling elements to be provided on the motor-vehicle seat, for cooperation with the quick coupling provided on the adapter frame, independently from the structure and type of the child seat. Furthermore, the device of the invention also enables a same child seat to be adapted to different motor-vehicles, and greatly improves safety, since the child seat is anchored to the motor-vehicle seat and therefore follows all movements thereof, the whole with a particularly simple, reliable and efficient structure. Furthermore, said adapter frame may be provided for example with a device for longitudinal adjustment of the position of the child seat with respect to the adapter frame, or also with a support device with a rotatable platform, for orienting the child seat around a vertical axis, producing thereby a further advantage from the standpoint of the convenience of use of the child seat.

Further features and advantages of the invention will become apparent from the description which follows with reference to the annexed drawings, given purely by way of non limiting example, in which:
- figure 1 is a diagrammatic perspective view of the device according to the invention,
- figure 2 is a side view of the device of figure 1,

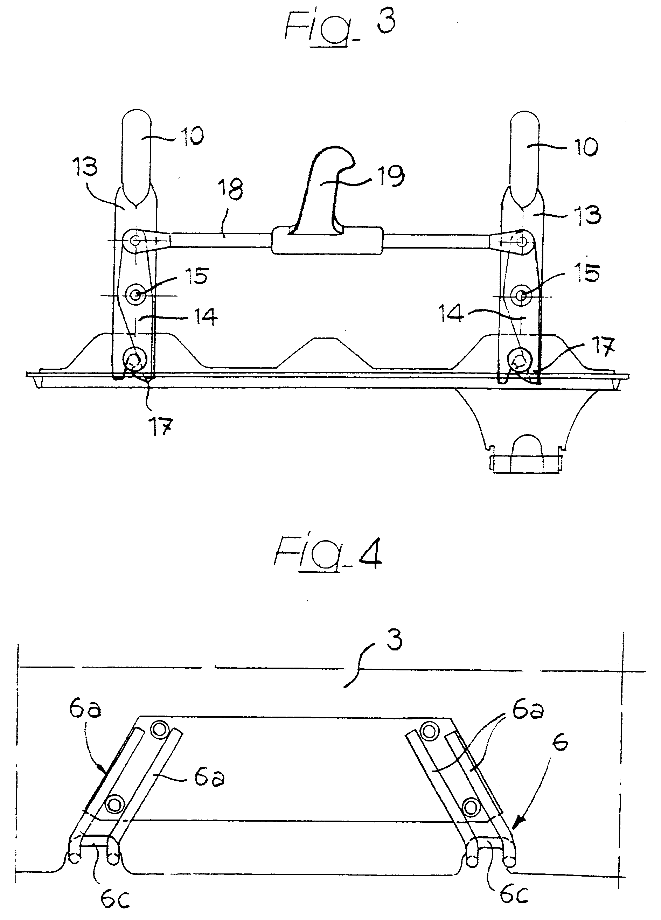

- figure 3 is a front view of the device of figure 1, and
- figure 4 is a view according to arrow IV of figure 2.

With reference to the drawings, numeral 1 generally designates a rear seat of a motor-vehicle comprising a cushion 2 and a backrest 3.

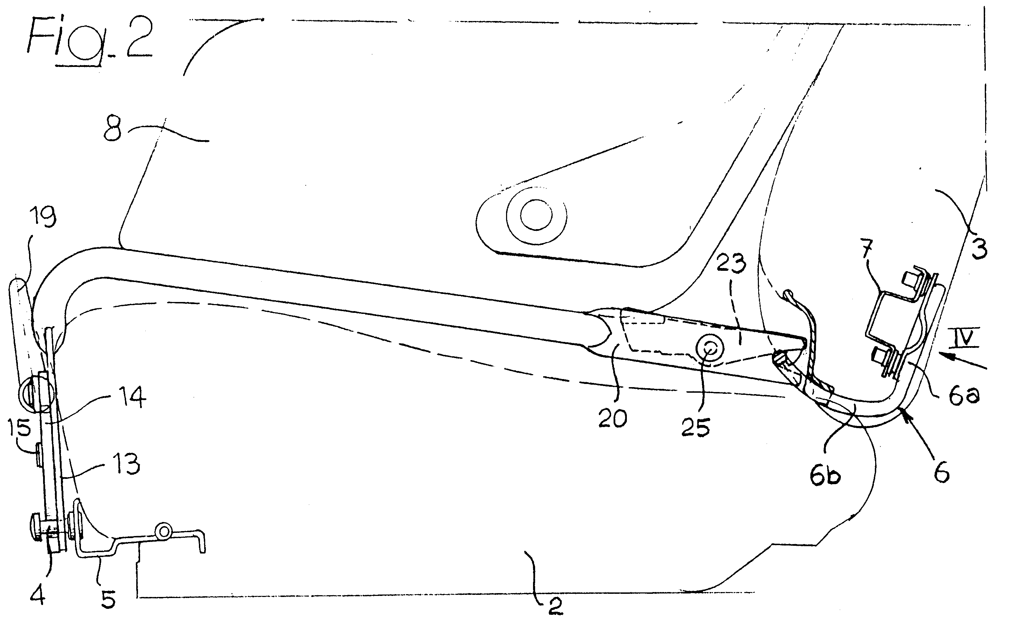

The seat is provided with one or more (two in the illustrated example) front coupling elements 4 in form of bolts projecting forwardly from the cushion 2 in a direction parallel to the longitudinal direction of the motor-vehicle, and fixed to the frame 5 (figure 2) of cushion 2. The seat is also provided with two coupling elements 6 each comprised of a U-shaped element having two end portions 6a fixed to the frame 7 of the backrest 3 at the rear thereof (figures 2, 4). Each coupling element 6 also has a front portion, which is curved in a L shape with respect to the end portions 6a and designated by reference numeral 6b in figure 2. This front portion projects forwardly through the gap between the cushion 2 and terminates with a cross central arm 6c which forms a coupling bolt for the child seat.

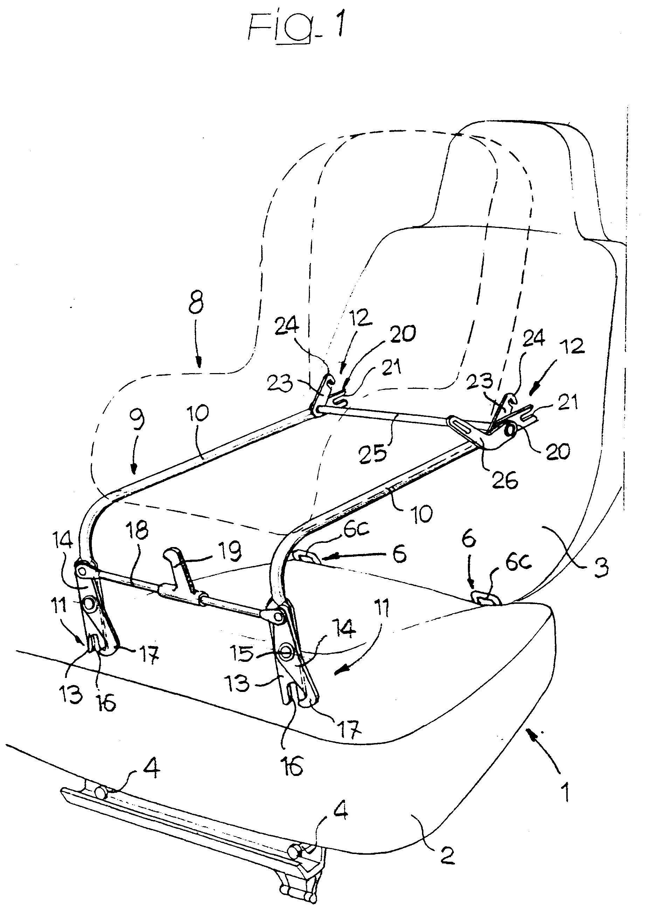

In figure 1, a child seat 8, shown by a dotted line, is provided at its lower part with an adapter frame 9 comprising two longitudinal bars 10 curved downwardly in a L shape at their front ends. At their front and rear ends, bars 10 are provided with quick coupling devices 11, 12. Each of the quick couplings 11 has a fork element 13 which is rigidly connected to the respective bar 10, and a rocking lever 14 pivotally mounted at 15 to the fork element 13. Each fork element 13 has a seat 16 for receiving the cooperating coupling bolt 4, whereas the rocking lever 14 ends with a hook-shaped end 17 able to hold bolt 4 within seat 16. The two rocking levers 14 may be driven simultaneously by a cross member 18 which is pivotally connected at its ends to the rocking levers 14 and is provided centrally with a handle 19.

Similarly, the two rear quick couplings 12 each have a fork element 20 with a seat 21 to which there is articulated a lever 23 with a hook-shaped end 24. The two levers 23 are connected to each other by a cross shaft 25 to which there is also connected an operating lever 26.

As it clearly appears from the foregoing description, the adapter frame 9, which is connected (permanently or releasably) to the child seat 8, may be connected rapidly to the motor-vehicle seat. The hook levers 14 and 23 of the front and rear couplings 11, 12 are biassed by spring means (not shown) towards their positions obstructing the respective seats 16, 21. Therefore, the user may lock the couplings 11, 12 on the cooperating bolts 4, 6c after he has operated levers 19, 26 so as to move levers 14, 23 to their release positions shown in figure 1. Once bolts 4, 6c have been received within the cooperating seats 16, 21, the user may abandon levers 19, 26 so as to cause levers 14, 23 to return to the positions in which they lock the coupling bolts. Unlocking is obtained in the opposite way.

Once the child seat has been mounted, it is secured directly to the seat frame, which ensures, as it has been already clarified in the foregoing, a greater safety. Furthermore, with the two longitudinal bars 10 there may be associated longitudinal guide devices for adjustment of the longitudinal position of the child seat 8, or also a supporting structure with a rotatable platform, for allowing the child seat 8 to be oriented around a vertical axis.

As it has been clarified already in the foregoing, the use of the adapter frame 9 allows different models of child seats to be adapted to the motor vehicle seat, which has coupling elements 4, 6 which have standardised shape and position.

Clearly, this shape and position of the coupling elements 4, 6c, as well as their number, may also be different from what has been illustrated by way of example. The same applies also to the shape of the quick coupling devices 11, 12 which may be provided in any other known way.

Finally, it is theoretically possible to invert the positions of coupling elements 4, 6c and cooperating coupling devices 11, 12, by providing the coupling elements on the adapter frame 9 and the coupling devices on the frame of the cushion and the backrest of the seat.

Whilst the principle of the invention remains the same, the details of construction and the embodiments may obviously vary with respect to what has been described and illustrated purely by way of example, if not thereby departing from the scope of the present invention as defined in the appended claims.

## Claims

1. Device connecting a child seat (8) to a motor-vehicle seat (1), comprising an adapter frame (9) carried by the child seat (8) and including two longitudinal bars (10) having respective front (11) and rear (12) connecting portions (11, 12) for connection to the structure of the motor-vehicle seat (1), characterized in that said connecting portions are in form of quick couplings (11, 12) adapted to cooperate with corresponding coupling elements (4, 6c) carried by the structure of the seat (1), each quick coupling (11,12) being moveable between a first locking position and a second release position, said quick couplings being associated in pairs to a respective common operating lever (19, 26), and said rear couplings (12) being adapted to cooperate with coupling elements (6c) fixed to the frame of the backrest (7) of the motor-vehicle seat and projecting forwardly from the gap between the cushion (2) and the backrest (3) of the seat (1).

2. Device according to claim 1, characterized in that the front couplings (11) are for cooperation with coupling elements (4) fixed to the frame (5) of the cushion (2) and projecting forwardly therefrom.

3. Device according to claim 1, characterized in that each coupling element is comprised of a bolt (4, 6c) and the cooperating quick coupling (11, 12) comprises a fork element (13, 20) fixed to the frame (5, 7) of the seat and having a seat (16, 21) for receiving the cooperating coupling bolt (4, 6c) as well as a lever (14, 23) pivotally mounted to the fork element (13, 20) and having a hook-shaped end (17, 24) for locking the bolt (4, 6c) within the seat (16, 21).

4. Device according to claim 3, characterized in that the two hook levers (14, 23) of the front and rear couplings (11, 12) are provided in pairs with a respective common driving lever (19, 26).

5. Device according to claim 1, characterized in that said adapter frame (9) is provided with a device for adjustment of the longitudinal position of the child seat (8).

6. Device according to claim 1, characterized in that said adapter frame (9) is provided with a support device with a rotating platform for orienting the child seat (8) around a vertical axis.

## Patentansprüche

1. Vorrichtung für die Verbindung eines Kindersitzes (8) mit einem Sitz (1) eines Kraftfahrzeuges, mit einem am Kindersitz (8) abgestützten Aufnahmerahmen (9) mit zwei langgestreckten Streben (10) mit jeweils vorderen (11) und hinteren (12) Verbindungsabschnitten (11, 12) zur Verbindung mit dem Aufbau des Kraftfahrzeugsitzes (1), dadurch gekennzeichnet, daß die Verbindungsabschnitte in der Form von Schnellkupplungen (11, 12) vorgesehen sind, die zur Zusammenarbeit mit entsprechenden Kupplungselementen (4, 6c) ausgebildet sind, die am Aufbau des Sitzes (1) abgestützt sind, wobei jede Schnellkupplung (11, 12) zwischen einer ersten Verriegelungsstellung und einer zweiten gelösten Stellung bewegbar ist, wobei die Schnellkupplungen paarweise an einem jeweiligen gemeinsamen Betätigungshebel (19, 26) angeordnet sind und die hinteren Kupplungen (12) zur Zusammenarbeit mit Kupplungselementen (6c) ausgebildet sind, die am Rahmen der Rückenlehne (7) des Kraftfahrzeugsitzes befestigt sind und vom Spalt zwischen dem Kissen (2) und der Rückenlehne (3) des Sitzes (1) nach vorne vorstehen.

2. Vorrichtung nach Anspruch 1, dadurch gekennzeichnet, daß die vorderen Kupplungen (11) zur Zusammenarbeit mit Kupplungselementen (4) dienen, die am Rahmen (5) des Kissens (2) befestigt sind und davon nach vorne gerichtet vorstehen.

3. Vorrichtung nach Anspruch 1, dadurch gekennzeichnet, daß jedes Kupplungselement einen Bolzen (4, 6 c) besitzt und die dazugehörige Schnellkupplung (11, 12) ein Gabelelement (13, 20) besitzt, welches am Rahmen (5, 7) des Sitzes befestigt ist und einen Sitz (16, 21) aufweist zur Aufnahme des zugehörigen Kupplungsbolzens (4, 6 c) und einen Hebel (14, 23), der am Gabelelement (13, 20) gelenkig befestigt ist und ein hakenförmiges Ende (17, 24) zur Verriegelung des Bolzens (4, 6c) innerhalb des Sitzes (16, 21) aufweist.

4. Vorrichtung nach Anspruch 3, dadurch gekennzeichnet, daß die beiden Hakenhebel (14, 23) der vorderen und hinteren Kupplungen (11, 12) paarweise mit einem jeweiligen gemeinsamen Betätigungshebel (19, 26) vorgesehen sind.

5. Vorrichtung nach Anspruch 1, dadurch gekennzeichnet, daß der Aufnahmerahmen (9) mit einer Vorrichtung zur Einstellung der Stellung des Kindersitzes (8) in Längsrichtung versehen ist.

6. Vorrichtung nach Anspruch 1, dadurch gekennzeichnet, daß der Aufnahmerahmen (9) mit einer Abstützvorrichtung mit einer drehbaren Plattform zur Ausrichtung des Kindersitzes (8) um eine vertikale Achse herum versehen ist.

## Revendications

1. Dispositif assemblant un siège d'enfant (8) à un siège (1) de véhicule à moteur, comprenant un châssis adaptateur (9) porté par le siège d'enfant (8) et comprenant deux barres longitudinales (10) ayant des portions d'assemblage (11, 12) respectives, avant (11) et arrière (12), pour l'assemblage à la structure du siège (1) du véhicule à moteur, caractérisé en ce que lesdites portions d'assemblage sont formées d'accouplements rapides (11, 12) adaptés pour coopérer avec des éléments d'accouplement correspondants (4, 6c) portés par la structure du siège (1), chaque accouplement rapide (11, 12) étant mobile entre une première position de verrouillage et une deuxième position de dégagement, lesdits accouplements rapides étant associés par paires à un levier d'actionnement commun respectif (19, 26) et lesdits accouplements arrière (12) étant adaptés pour coopérer avec des éléments d'accouplement (6c) fixés à l'armature du dossier (7) du siège du véhicule à moteur et faisant saillie en avant du vide existant entre le coussin (2) et le dossier (3) du siège (1).

2. Dispositif selon la revendication 1, caractérisé en ce que les accouplements avant (11) sont destinés à coopérer avec des éléments d'accouplement (4) fixés à l'armature (5) du coussin (2) et qui font saillie en avant de celui-ci.

3. Dispositif selon la revendication 1, caractérisé en ce que chaque élément d'accouplement est composé d'un tenon (4, 6c) et l'accouplement rapide (11, 12) coopérant avec lui comprend un élément en forme de fourche (13, 20) fixé à l'armature (5, 7) du siège et muni d'un logement (16, 21) destiné à recevoir le tenon d'accouplement (4, 6c) coopérant avec lui, ainsi qu'un levier (14, 23) monté pivotant sur l'élément en forme de fourche (13, 20) et ayant une extrémité (17, 24) en forme de crochet destinée à verrouiller le tenon (4, 6c) dans le logement (16, 21).

4. Dispositif selon la revendication 3, caractérisé en ce que les deux leviers à crochet (14, 23) des accouplements avant et arrière (11, 12) sont équipés par paires d'un levier d'entraînement commun respectif (19, 26).

5. Dispositif selon la revendication 1, caractérisé en ce que ledit châssis adaptateur (9) est muni d'un dispositif pour le réglage de la position longitudinale du siège d'enfant (8).

6. Dispositif selon la revendication 1, caractérisé en ce que ledit châssis adaptateur (9) est équipé d'un dispositif de support muni d'une plate-forme tournante permettant d'orienter le siège d'enfant (8) autour d'un axe vertical.
